# EUROPEAN PATENT APPLICATION

(11) **EP 4 810 223 A1**
(43) Date of publication of application: **23.09.2026**
(21) Application number: 26165473.5
(22) Date of filing: 17.03.2026
(51) Int. Cl.: B29C 45/00, B65D 35/44, B65D 47/08

(54) **TUBE CONTAINERS AND METHODS OF MANUFACTURE**

(30) Priority: 21.03.2025 EP 25305400
(71) Applicant: HCT Packaging, Inc., Bridgewater, NJ 08807 (US)
(72) Inventor: FARRO, Leonardo, Bridgewater, NJ, 08807 (US)
(74) Representative: Vossius & Partner Patentanwälte Rechtsanwälte mbB

(57) **Abstract**

A tube container and method of manufacture. A molding method for making a tube container having a tube (10), a top (12), a lid (14), a living hinge (20) connecting the lid to the top, the top having an orifice (16), the top having a gate (18) for injection molding located between the living hinge and the orifice, the lid having a protrusion (22) positioned so that when the lid is closed, the protrusion seals the orifice, the method comprising injection molding a material at the gate to form the tube, the top, the lid and the living hinge in a single injection molding step.

## Description

### BACKGROUND

Devices exist for holding cosmetic or medicinal products. Some such devices comprise a tubular shell or bottle for holding a product, and a cap for closing the tube or bottle. In the cosmetics and personal care industries, these devices are used for containing a product to be applied to a body. Exemplary products include liquids, creams, gels, and various makeup and skincare products such as foundation, concealer, lotion serum, petroleum products, moisturizer, sunscreen, etc. Many such containers are made by taking an extruded tube and adding a molded structure for receiving an applicator and cap to one end, leaving the other end open for filling with a cosmetic or medicinal product. Once the extruded tube has been filled with the product, the open end is typically crimped shut. A simpler process, potentially having a single step manufacture, is desirable.

### OVERVIEW

The present inventors have recognized, among other things, that a problem to be solved is the need for new and/or alternative tube container manufacturing. An illustrative example provides a one-step molding process for making a tube container having an open ended tube, a top, a lid, and a living hinge connecting the lid to the top. In the illustrative example, the top has an orifice and a gate for injection molding located between the living hinge and the orifice, the lid having a protrusion positioned so that when the lid is closed, the protrusion seals the orifice. The method includes injection molding a material at the gate to form the tube, the top, the lid and the living hinge in a single injection molding step. After molding, the tube is filled form its open end and the open end is crimped.

Alternatively or additionally to the example above, the material comprises low density polyethylene (LDPE).

Alternatively or additionally to any of the examples above, the material comprises high density polyethylene (HDPE).

Alternatively or additionally to any of the examples above, the material comprises polypropylene blended with thermoplastic polyolefin.

Alternatively or additionally to any of the examples above, the injection molding is performed at a pressure in the range of 50 MPa to 150 MPa, a melt temperature in the range of 180°C to 240°C, and a mold temperature in the range of 20°C to 60°C.

Alternatively or additionally to any of the examples above, the tube has a wall thickness of about 0.4 mm.

Alternatively or additionally to any of the examples above, the tube has a total height in the range of about 90 mm to about 100 mm.

Alternatively or additionally to any of the examples above, the tube has a cross-sectional shape selected from the group consisting of oval, rectangular, square, triangular, and polygonal.

An example tube container includes a tube, a top, a lid, a living hinge connecting the lid to the top, the top having an orifice, the top having a gate for injection molding located between the living hinge and the orifice, the lid having a protrusion positioned so that when the lid is closed, the protrusion seals the orifice, the tube container being formed by injection molding a material at the gate to form the tube, the top, the lid and the living hinge in a single injection molding step.

Alternatively or additionally to the example above, the material comprises low density polyethylene (LDPE).

Alternatively or additionally to any of the examples above, the material comprises high density polyethylene (HDPE).

Alternatively or additionally to any of the examples above, the material comprises polypropylene blended with thermoplastic polyolefin.

Alternatively or additionally to any of the examples above, the tube has a wall thickness of about 0.4 mm and a total height in the range of about 90 mm to about 100 mm.

Alternatively or additionally to any of the examples above, the tube has an oval cross-sectional shape with a width in the range of about 25 mm to about 35 mm and a depth in the range of about 20 mm to about 30 mm.

Alternatively or additionally to any of the examples above, the orifice forms an opening of approximately 3 mm and the protrusion has a matching or slightly larger outer dimension.

This overview is intended to introduce the subject matter of the present patent application. It is not intended to provide an exclusive or exhaustive explanation. The detailed description is included to provide further information about the present patent application.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
Figure 1 is a perspective view of a tube container;
Figure 2 is a rear view of the tube container;
Figure 3 is a side view of the tube container;
Figure 4 is a section view of the tube container along line 4-4 of Figure 1; and
Figure 5 is a top view of the tube container.

### DETAILED DESCRIPTION

An example tube container includes a tube, a top, a lid, and a living hinge connecting the lid to the top. The top has an orifice and a gate for injection molding located between the living hinge and the orifice. The lid s a protrusion positioned so that when the lid is closed, the protrusion seals the orifice. The tube container is formed by injection molding a material at the gate to form the tube, the top, the lid, and the living hinge in a single injection molding step. The resulting one piece device is different from assembled containers because it is recyclable as a single monolithic piece formed from a single material. The one piece device also differs from assembled, multi-piece containers as it will be more apparent to the user that it is recyclable. The one piece construction eliminates the typical points of failure and/or breaking of conventional multi-piece assembled containers that are due to hinges and seams between pieces made of different materials.

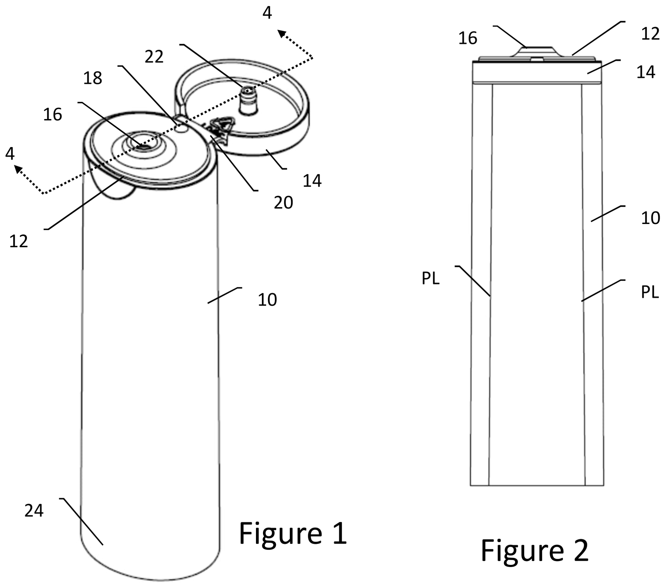

Figure 1 is a perspective view of a one piece tube container 10. The container 10 is a tube and includes a top 12 and a closable lid 14. The top 12 includes an orifice 16 for dispensing product from the container 10. An injection molding gate location is shown at 18. A living hinge 20 connects the lid 14 to the top 12, allowing for repeated opening and closing of the lid 14. A protrusion 22 is optionally included in the lid 14 at a position so that, when the lid 14 is closed, the protrusion 22 will enter and seal the orifice 16. The lower end 24 of the container is open, as shown.

The view of Figure 1 shows the container 10 as it would appear following a one-step injection molding manufacturing method. The material for the container, which can be a low density polyethylene (LDPE), is injection molded at the location of the gate 18 to form the entire piece as shown in a single mold step. Other materials may be selected, such as a high density polyethylene (HDPE), and/or polypropylene blended with Adflex^{™} resin (or other thermoplastic polyolefin) and/or other softening agent.

Selecting the gate location at 18 allows for molding of the detailed parts of the top and lid at relatively higher pressure and temperatures, while still allowing the mold material to extend down into and thereby form the tube container 10 and open end 24. The lid 14 is formed in the same step; the mold material flows through the passage for forming the living hinge 20 to form the lid 14 and protrusion 22. In an example using LDPE, the material would be molded using pressures in the range of 50 megapascal (MPa) to 150 MPa, melt temperature in the range of 180C to 240C, and mold temperature in the range of 20C to 60C; these ranges are illustrative.

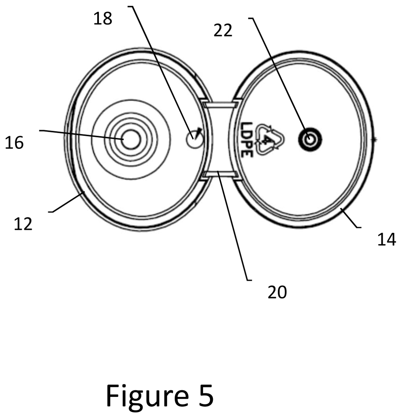

The wall thickness for the tube container 10 may be, in an illustrative example, about 0.4 millimeter (mm). The total height of the tube may be, for example and without limitation, in the range of about 90 mm to about 100 mm, though other designs may range from about 40 mm to about 150 mm. The lid 14 may have a total height in the range of about 5 mm. The tube container 10 shown in the drawings is oval (Figure 5, below), however, with a molded design, the shape in cross section may be rectangular, square, triangular, polygonal (5 or more sides for example), and may include regular or irregular shapes if desired. The tube container 10 body can be made with ribs, stripes, and any suitable decorative or functional design, such as by providing a texture on the outside thereof.

The shape shown may be, for example, with a width of about 25 mm to about 35 mm and a depth of about 20 mm to about 30 mm; an illustrative 30 ml volume tube may have dimensions of about 25 mm by about 29 mm. Sizes in the cross section may range from 10 mm to 30 mm, or more or less, and the volume may be as small as 5 milliliter (ml) or less, ranging up to 100 ml or more if desired.

The orifice 16 may form approximately a 3 mm opening, and the protrusion 22 may have a matching, or slightly larger, outer dimension. Larger or smaller orifice and protrusion pairings, including multiple orifices, may be used, as desired. These dimensions are merely illustrative of one example. Other sizes may be used, though some dimensions may change in a relative manner as, for example, greater height may call for an increase in wall thickness on the tube.

Figure 2 is a rear view of the tube container 10. Here, the structure forming the orifice 16 can be seen extending above the container top 12. The lid 14 is in the foreground. The removal of the container 10 is achieved as indicated by the parting line PL shown; other positions and structures can be used as desired.

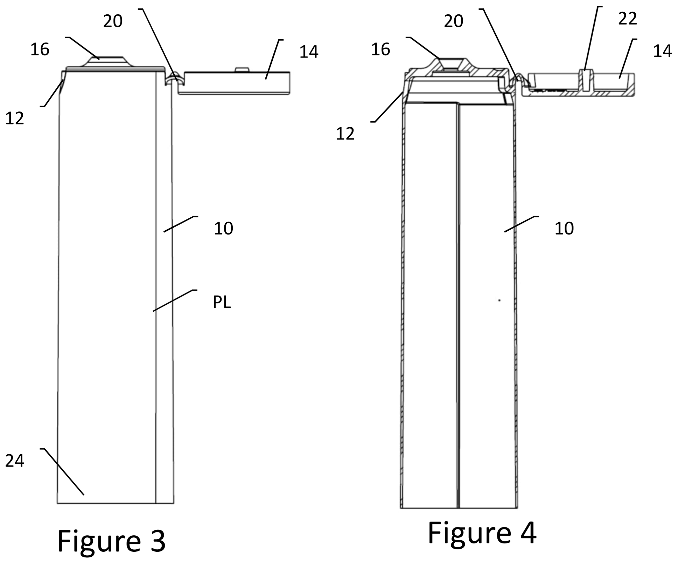

Figure 3 is a side view of the tube container 10. The container 10 is again shown with the parting line PL extending down to the tube opening at 24. The top 12 includes the structure forming orifice 16, and the living hinge can be seen extending to the lid 14.

Figure 4 is a section view of the tube container 10 along line 4-4 of Figure 1. Here it may be observed that the molded tube forms a thin-walled container 10. The thicker material at the top 12, with orifice 16 can be observed, as well as the living hinge 20 extending to the lid 14 with protrusion 22.

Figure 5 is a top view of the tube container 10. The top view highlights the top 12 having the orifice shown at 16, with the molding gate shown at 18, positioned between the orifice structure 16 and the living hinge 20 and lid 14. This illustrative example is marked with the LDPE indication, though it is noted that other materials (HDPE) and/or blends may be used instead.

Each of these non-limiting examples can stand on its own, or can be combined in various permutations or combinations with one or more of the other examples.

The above detailed description includes references to the accompanying drawings, which form a part of the detailed description. The drawings show, by way of illustration, specific embodiments. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein. In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." Moreover, in the claims, the terms "first," "second," and "third," etc. are used merely as labels, and are not intended to impose numerical requirements on their objects. The above description is intended to be illustrative, and not restrictive. For example, the above-described examples (or one or more aspects thereof) may be used in combination with each other. Other embodiments can be used, such as by one of ordinary skill in the art upon reviewing the above description.

The Abstract is provided to comply with 37 C.F.R. §1.72(b), to allow the reader to quickly ascertain the nature of the technical disclosure. It is submitted with the understanding that it will not be used to interpret or limit the scope or meaning of the claims.

Also, in the above Detailed Description, various features may be grouped together to streamline the disclosure. This should not be interpreted as intending that an unclaimed disclosed feature is essential to any claim. Rather, innovative subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the protection should be determined with reference to the appended claims, along with the full scope of equivalents to which such claims are entitled.

## Claims

1. A molding method for making a tube container having a tube, a top, a lid, a living hinge connecting the lid to the top, the top having an orifice, the top having a gate for injection molding located between the living hinge and the orifice, the lid having a protrusion positioned so that when the lid is closed, the protrusion seals the orifice, the method comprising injection molding a material at the gate to form the tube, the top, the lid and the living hinge in a single injection molding step.

2. The method according to claim 1, wherein the material comprises low density polyethylene (LDPE).

3. The method according to claim 1, wherein the material comprises high density polyethylene (HDPE).

4. The method according to claim 1, wherein the material comprises polypropylene blended with thermoplastic polyolefin.

5. The method according to any one of claims 1 to 4, wherein the injection molding is performed at a pressure in the range of 50 MPa to 150 MPa, a melt temperature in the range of 180°C to 240°C, and a mold temperature in the range of 20°C to 60°C.

6. The method according to any one of claims 1 to 5, wherein the tube has a wall thickness of about 0.4 mm.

7. The method according to any one of claims 1 to 6, wherein the tube has a total height in the range of about 90 mm to about 100 mm.

8. The method according to any one of claims 1 to 7, wherein the tube has a cross-sectional shape selected from the group consisting of oval, rectangular, square, triangular, and polygonal.

9. A tube container comprising a tube, a top, a lid, a living hinge connecting the lid to the top, the top having an orifice, the top having a gate for injection molding located between the living hinge and the orifice, the lid having a protrusion positioned so that when the lid is closed, the protrusion seals the orifice, the tube container being formed by injection molding a material at the gate to form the tube, the top, the lid and the living hinge in a single injection molding step.

10. The tube container according to claim 9, wherein the material comprises low density polyethylene (LDPE).

11. The tube container according to claim 9, wherein the material comprises high density polyethylene (HDPE).

12. The tube container according to claim 9, wherein the material comprises polypropylene blended with thermoplastic polyolefin.

13. The tube container according to any one of claims 9 to 12, wherein the tube has a wall thickness of about 0.4 mm and a total height in the range of about 90 mm to about 100 mm.

14. The tube container according to any one of claims 9 to 13, wherein the tube has an oval cross-sectional shape with a width in the range of about 25 mm to about 35 mm and a depth in the range of about 20 mm to about 30 mm.

15. The tube container according to any one of claims 9 to 14, wherein the orifice forms an opening of approximately 3 mm and the protrusion has a matching or slightly larger outer dimension.
